# EUROPEAN PATENT APPLICATION

(11) **EP 3 098 897 A1**
(43) Date of publication of application: **30.11.2016**
(21) Application number: 16170811.0
(22) Date of filing: 23.05.2016
(51) Int. Cl.: H01M 10/615, H01M 10/6571, H01M 10/651, H05B 3/34, H01M 10/0525, H05B 3/14

(54) **DEVICE AND METHOD FOR WARMING LITHIUM BATTERIES**

(30) Priority: 26.05.2015 US 201562179974 P
(71) Applicant: Senliao, Lou, Yuyao Zhejiang 315490 (CN); Chungli, Johnny Tu, Taipei 203 (TW)
(72) Inventor: Senliao, Lou, Yuyao Zhejiang 315490 (CN); Chungli, Johnny Tu, Taipei 203 (TW)
(74) Representative: Berggren Oy Ab

(57) **Abstract**

A direct current powered heating jacket utilizing a carbon fiber heating element that, when enveloping a lithium-ion battery or battery pack, will quickly warm the battery or battery pack in a cold environment to its optimal operating temperature, thereby allowing the maximum discharge rate of the battery pack, is disclosed. Specifically, a system comprising one or more layers of carbon fiber heating elements within a flexible "battery jacket" that can be placed on or wrapped around a lithium-ion battery or battery pack is disclosed. The battery jacket may be connected to a direct current power source and can be controlled by a central processing unit ("CPU"). When the lithium-ion battery itself is used as the DC power source, the battery becomes "self-warming" and the optimal operating temperature of the battery can be maintained without an external DC power source.

## Description

### BACKGROUND OF THE INVENTION

The present invention relates to a device and a method for warming a lithium-ion battery, battery pack or series of lithium-ion batteries that are used in devices that are commonly exposed to harsh environmental conditions, most notably low temperatures in the freezing or sub-freezing range. Most commonly known devices utilizing lithium-ion batteries under these conditions are car, or other motor vehicle batteries, portable jump starters, outdoor power tools and the like. In particular, the device and method according to the present invention provides a quick and efficient method for warming a lithium-ion battery from a temperature well below the optimal operating temperature of the battery, as well as maintaining the temperature of the battery within its temperature limits rating for producing maximum electrical discharge. Maintaining the temperature of the lithium-ion battery in this temperature range permits the battery to be always ready for use, and also has been shown to extend the useful lifetime of the battery itself.

Lithium-ion batteries are finding more and more uses in a variety of applications in today's world. Of significant importance is their use in hybrid and totally electric motor vehicles as well as portable power banks and jump starters for starting car and truck engines. Gasoline and diesel engines typically use lead-acid batteries, and when the lead-acid battery is too weak due to battery age or low temperature to provide enough cranking power to start the engine, jump-starting using lithium-ion battery packs can be used. However, the performance of lithium-ion batteries is also highly dependent on temperature. All direct current batteries function best in a specific temperature range. Batteries that are discharged in a cold environment have a much higher internal resistance that lowers their discharge capacity. For example, an average lead-acid car battery with 100% capacity at 27°C (80°F) will typically deliver only 50% at -18°C (0°F). Most lead-acid batteries discharge best at 20°C (68°F), or slightly below.

Similarly, lithium-ion battery cells require careful temperature control because of decreased chemical reaction rates at lower temperatures, translating to a reduction of the current carrying capacity of the cell. Up to now however, lithium-ion batteries have not replaced lead-acid batteries used in many products or applications because of their chemistry being greatly affected by low or very cold temperatures. Specifically, lithium-ion batteries reach an optimal electrical discharge rate when the temperature is above 15 °C (59°F), or higher. Lower than this temperature, lithium-ion battery performance begins to diminish. When the temperature reaches 0°C, the performance drops to 20% and the discharge rate is generally no higher than 5 amps. Lithium-ion batteries generally cease to function when the temperature falls below -10°C. This is well below the rate for charging a lead-acid battery or jump-starting a car or truck engine.

Presently, there is no device or method in use, in either private or commercial applications, that provides for rapidly warming a lithium-ion battery or battery pack to an optimal discharge temperature, or for maintaining the lithium-ion battery or battery pack at its optimal discharge temperature. Known methods for employing lithium-ion batteries at low temperatures do not include pre-heating the batteries but entail "boosting" the batteries through high discharge rates, which can require boosting of up to 8 or 10 times for the battery to reach working temperature. This can cause damage to the battery and also can shorten its useful life, as well as potentially damaging the starter or capacitors in a motor vehicle that is being jump-started.

By utilizing the present invention in products that presently use lead-acid batteries, manufacturers can switch over or replace them with lithium-ion technology. In addition, the present invention can literally heat-up the lithium-ion batteries in seconds on demand, thereby eliminating the need to provide power to the battery jacket all the time. The average draw required to warm lithium-ion batteries or battery packs to their optimal discharge temperature is minimal.

### SUMMARY OF THE INVENTION

A principle object of the present invention is to provide a device and method for warming lithium-ion batteries or battery packs to their optimal electrical discharge operating temperatures, thereby allowing the use of lithium-ion batteries in cold or freezing temperatures. It is also an object of the present invention to provide a device and method for rapidly warming the lithium-ion battery or battery pack, and for utilizing a low amount of electrical energy to do so. It is a further object of this invention to provide a device and method for detecting when the temperature of the lithium-ion battery or battery pack is below the optimal electrical discharge temperature, and to automatically warm the lithium-ion battery or battery pack until the optimal electrical discharge temperature is reached. It is still a further object of this invention to maintain a lithium-ion battery or battery pack at its optimal discharge temperature range, particularly when exposed to low or freezing temperatures. It is also an object of the present invention to provide a device and method for warming a lithium-ion battery or battery pack utilizing the lithium-ion battery to be warmed as the DC power source, thus adding a portability feature to the device by eliminating the need for an external DC power source.

Thus, according to these objectives, the system of the present invention uses a heating element constructed of flexible carbon fiber material. The carbon fiber material utilized conducts direct current voltage and has a resistivity such that heat is created when DC voltage is applied. The flexible heating element is encased in a foldable polymer material that forms an interface between the heating element and the lithium-ion battery to be warmed, in the form of a "battery jacket." The polymer material selected has a high tolerance for heat such that it remains flexible after the heating element is repeatedly warmed. Also, the polymer material has the ability to allow heat to transfer from the heating element to the battery, while not acting as an insulator.

The foldable battery jacket is placed on and/or around the lithium-ion battery or battery pack to be warmed. When more than one lithium-ion battery is used, the battery jacket can also be placed between the individual cells in order to provide maximum surface area contact to facilitate heating of the battery. In addition, multiple layers of the heating jacket can be applied when necessary due to extremely cold conditions. The carbon fiber heating element is typically configured to have two ends designed as terminals for connecting the DC power source to the heating element. The DC power source can be any source of sufficient DC voltage, which can include a lithium-ion battery, and can also be the lithium-ion or battery pack to be warmed.

The DC voltage from the DC power source is controlled by a central processing unit ("CPU"), which also controls other elements and functions of the device. For example, the device may also include a temperature sensor, connected to the CPU, for monitoring the temperature of the lithium-ion battery. When the temperature of the lithium-ion battery falls below a pre-determined, pre-set temperature, voltage is applied to the carbon fiber heating element, causing it to warm. When the temperature of the lithium-ion battery consequently reaches a pre-set maximum temperature, the applied DC voltage is discontinued. The lithium-ion battery temperature range in which the DC voltage is applied can be any range desired, narrow or large, but should be selected according to the ideal operational parameters of the lithium-ion battery. In a preferred embodiment of the invention, the lower temperature for pre-heating the lithium-ion battery is set at 15 °C (59°F), and the upper shut-off temperature is set for 65 °C (149°F), to protect the lithium-ion battery from being over heated.

Furthermore, the device and method of this invention also provides for LCD display indicators that tell the user the status of the system. For example, LCD displays showing battery capacity, charging mode, low temperature warning, voltage applied and timing of heating, can be used.

### BRIEF DESCRIPTION OF THE DRAWINGS

FIG. 1 is a diagrammatic view of an embodiment of this invention;
FIG. 2 is a view of an embodiment of this invention;
FIG. 3 is perspective view of an embodiment of this invention;
FIG. 4 is a top view of a further embodiment of the invention; and
FIG. 5 is a diagrammatic view of a further embodiment of this invention.

### DETAILED DESCRIPTION OF THE PREFERRED EMBODIMENTS

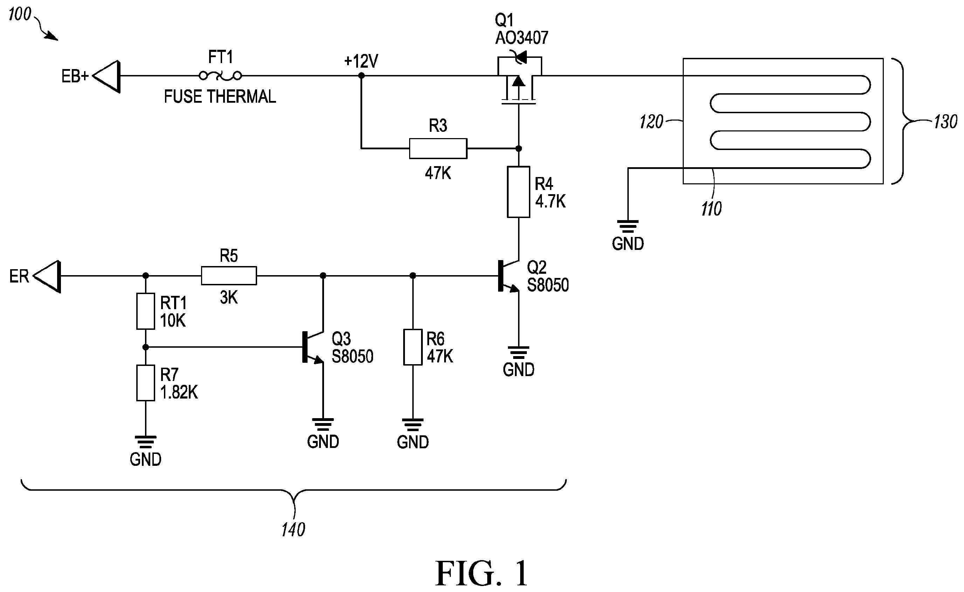

The preferred embodiments of the present invention will now be described with reference to the FIGS. 1-5 of the drawings. Identical elements in the various figures are designated with the same reference numerals.

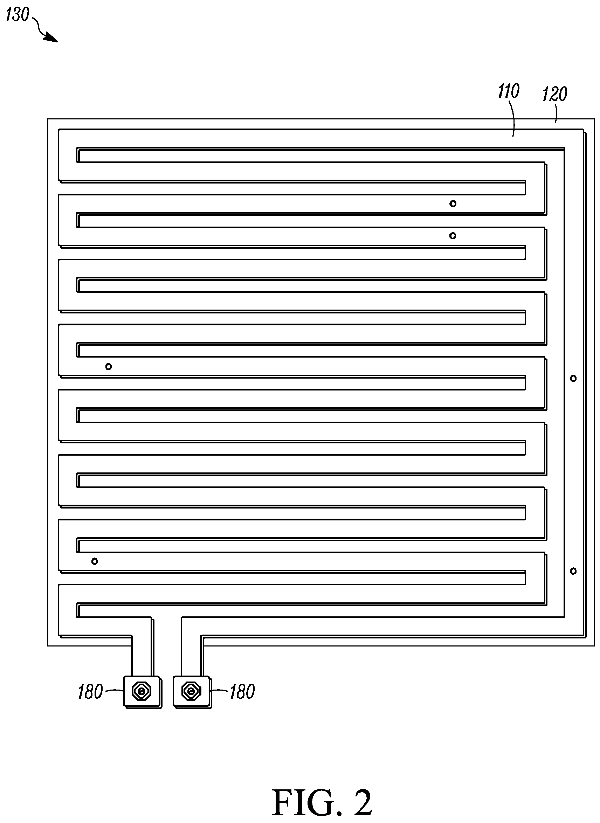

FIGS. 1 and 2 illustrate a preferred embodiment of the device of the present invention, generally designated by the reference number 100. The device comprises a flexible carbon fiber heating element 110 enclosed in a flexible, foldable polymer covering 120 which, together with heating element 110, forms what is herein referred to as "battery jacket" 130. FIG. 1 also illustrates by schematic diagram electronic circuitry 140 that regulates the DC flow to heating element 110. The electronic components comprising electronic circuitry 140 are known to those of skill in the art as identified in FIG. 1.

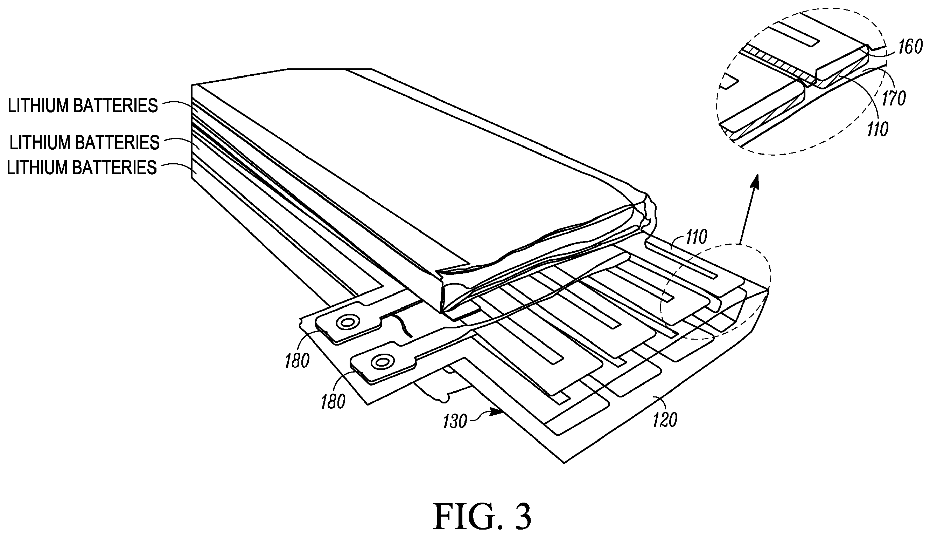

FIG. 2 illustrates battery jacket 130, where it is shown that heating element 110 is encased in a flexible polymeric covering 120, much in the form of a laminate (see inset FIG. 3). Referring to FIG. 2, the flexible carbon fiber heating element 110 is comprised of conductive carbon fiber material that has resistivity to electrical current. The resistivity characteristic is such that, when DC electrical current is applied, heating element 110 will rapidly warm to a desired temperature with only a minimum of current. Although heating element 110 is illustrated as being generally flat, it may be of any desired cross-sectional shape, such as round or oval, for examples. Heating element 110 also has a width and a thickness dimension which can vary according to the size of battery jacket 130 itself. Utilizing a wider heating element 110 provides for more surface area for contacting the lithium-ion battery and thus more efficient heating of the battery. When considering the width and thickness of heating element 110, it must be considered that heating jacket 130 and therefore heating element 110 are meant to be flexible for wrapping around a lithium-ion battery. Heating element 110 also comprises two terminal ends 180 for connecting to the DC current provide through electronic circuitry 140.

A cross-sectional view of battery jacket 130, (see inset FIG. 3), illustrates carbon fiber heating element 110 enclosed between a polymer top layer 160 and a polymer bottom layer 170.

FIG. 3 illustrates battery jacket 130 as folded between three lithium-ion batteries (not numbered), in the form of a battery pack. The flexible nature of carbon fiber heating element 110 and the polymer layers 160, 170 provides battery jacket 130 with the capability of completely surrounding one of the lithium-ion batteries, while the other two lithium-ion batteries are placed above and below battery jacket 130. In this manner, all three lithium-ion batteries are warmed simultaneously. Furthermore, other configurations using battery jacket 130, such as completely surrounding a lithium-ion battery to be warmed on all sides is contemplated by the within invention.

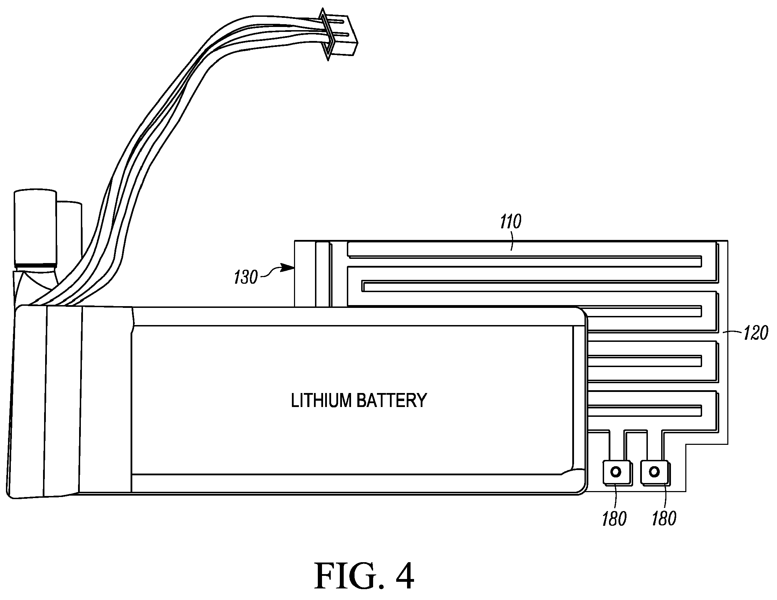

FIG. 4 illustrates another view of a lithium-ion battery being warmed by battery jacket 130 of the within invention. In this embodiment, battery jacket 130 is shown placed below a single lithium-ion battery. However, because of the flexibility of battery jacket 130, it can also wrap around the battery, as it does for the middle battery shown in FIG. 3.

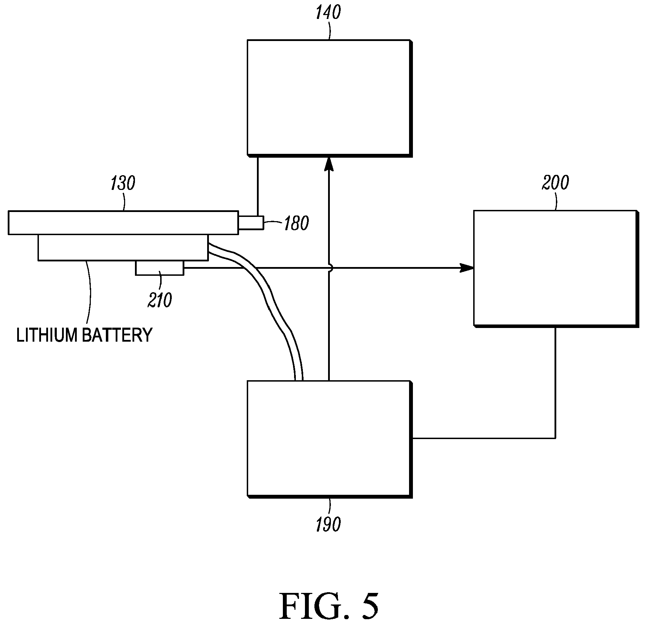

FIG. 5 diagrammatically depicts a device for warming a lithium-ion battery, within the scope of this invention. The DC voltage from DC power source 190 is provided through electronic circuitry 140 to battery jacket 130. Central processing unit 200, which also controls other elements and functions of the device, is connected to power source 190 and regulates the DC voltage therefrom, including turning the voltage on and off as desired. An embodiment of this invention may also include a temperature sensor 210, connected to CPU 200, for monitoring the temperature of the lithium-ion battery. When the temperature of the lithium-ion battery falls below a pre-determined, pre-set temperature set in CPU 200, DC voltage is applied to heating element 110 in battery jacket 130, causing it to warm. When the temperature of the lithium-ion battery consequently reaches a pre-set maximum temperature set in CPU 200, CPU 200 signals power source 190 to discontinue the applied DC voltage. The lithium-ion battery temperature range in which the DC voltage is applied can be any range desired, narrow or large, but should be selected according to the ideal operational parameters of the lithium-ion battery. In a preferred embodiment of the invention, the lower temperature for pre-heating the lithium-ion battery is set at 15 °C (59°F), and the upper shut-off temperature is set for 65 °C (149°F), to protect the lithium-ion battery from being over heated.

Also, the lithium-ion battery itself may be connected to power source 190 and can become the source for the DC voltage for heating element 110. In this configuration, the lithium-ion battery becomes self-warming such that it is capable of maintaining its operational temperature for a period of time, while using only a minimum of electrical energy.

The preceding preferred embodiments are illustrative of the practice of the invention. It is to be understood, however, that other expedients known to those of skill in the art, or disclosed herein, may be employed without departing from the spirit of the invention or the scope of the claims.

## Claims

1. A device (100) for warming one or more lithium-ion batteries, comprising:
- a heating jacket (130) comprising a flexible carbon fiber heating element (110) having a top layer of foldable polymeric material (120) and a bottom layer of foldable polymeric material (120);
- a direct current power source (190) connected to each of two ends (180) of the carbon fiber heating element (110) to provide direct current electrical power to the heating element (110);
- a central processing unit (200), connected to the direct current power source (190) for controlling the electrical output of the power source (190) to the heating element (110);
- a temperature sensor (210) for determining the temperature of the one or more lithium-ion batteries to be warmed, wherein the temperature sensor (210) is connected to the central processing unit (200);
**characterized in that** the flexible heating jacket (130) is located over, around or in between the one or more lithium-ion batteries to be warmed.

2. The device of claim 1, **characterized in that** the direct current power source (190) comprises a transformer for converting AC electrical current to direct current.

3. The device of claim 1, **characterized in that** direct current is applied to the heating element (110) by the central processing unit (200) when the temperature sensor (210) indicates that the temperature of the one or more lithium batteries is below a pre-selected lower temperature.

4. The device of claim 3, **characterized in that** the direct current applied to the heating element (110) is discontinued by the central processing unit (200) when the temperature sensor (210) indicates that the temperature of the one or more lithium-ion batteries has reached a pre-selected higher temperature.

5. The device of claim 1, **characterized in that** the direct current power source (190) comprises the one or more lithium-ion batteries to be warmed.

6. A method for warming one or more lithium-ion batteries, comprising:
- placing a heating jacket (130) comprising a flexible carbon fiber heating element (110) having a top layer of foldable polymeric material (120) and a bottom layer of foldable polymeric material (120), over, around or in between the one or more lithium-ion batteries to be warmed;
- applying direct current electrical power to each of two ends (180) of the carbon fiber heating element (110);
- monitoring the internal temperature of the one or more lithium-ion batteries to be warmed,
**characterized in that** the method further comprises:
- disconnecting the direct current electrical power to the carbon fiber heating element (110) when the internal temperature of the one or more lithium-ion batteries to be warmed reaches a certain pre-selected upper temperature, as determined by a temperature sensor (210).

7. The method of claim 6, **characterized in that** the pre-selected upper temperature is 65 °C.

8. The method of claim 6, **characterized in that** the application of direct current electrical power is controlled by a central processing unit (200).

9. The method of claim 6, **characterized in that** the direct current electrical power is applied when the temperature of the one or more lithium-ion batteries reaches a pre-selected lower temperature.

10. The method of claim 9, **characterized in that** the pre-selected lower temperature is 15 °C or below.

11. A device (100) for maintaining the internal temperature of one or more lithium-ion batteries within a pre-determined temperature range, comprising:
- a heating jacket (130) comprising a flexible carbon fiber heating element (110) having a top layer of foldable polymeric material (120) and a bottom layer of foldable polymeric material (120), located over, around or in between the one or more lithium-ion batteries;
- a temperature sensor (210) for determining the internal temperature of the one or more lithium-ion batteries, wherein the temperature sensor (210) is connected to a central processing unit (200);
- a direct current electrical power source (190) connected to each of two ends (180) of the carbon fiber heating element to (110) provide direct current electrical power to the heating element (110),
**characterized in that** the direct current electrical power is applied to the heating element by the central processing unit (200) when the temperature sensor (210) indicates that the internal temperature of the one or more lithium-ion batteries is at or below a pre-determined lower temperature, and the direct current electrical power to the heating element (110) is discontinued by the central processing unit when the internal temperature of the one or more lithium-ion batteries reaches a pre-determined upper temperature.

12. The device of claim 11, **characterized in that** the pre-determined lower temperature is about 15 °C and the pre-determined upper temperature is about 65 °C.

13. The device of claim 11, **characterized in that** the direct current electrical power source is the one or more lithium-ion batteries.
